# EUROPEAN PATENT SPECIFICATION

(11) **EP 1 474 799 B1**
(45) Date of publication and mention of the grant of the patent: **30.11.2005**
(21) Application number: 03737402.2
(22) Date of filing: 24.01.2003
(51) Int. Cl.: G11B 7/24

(54) **REWRITABLE OPTICAL STORAGE MEDIUM AND USE OF SUCH MEDIUM**
WIEDERBESCHREIBBARES OPTISCHES SPEICHERMEDIUM UND VERWENDUNG EINES SOLCHEN MEDIUMS
SUPPORT OPTIQUE REENREGISTRABLE ET SON UTILISATION

(30) Priority: 06.02.2002 EP 02075496
(43) Date of publication of application: 10.11.2004
(73) Proprietor: Koninklijke Philips Electronics N.V., 5621 BA Eindhoven (NL)
(72) Inventor: ZHOU, Guo-Fu, NL-5656 AA Eindhoven (NL); RIJPERS, Johannes, C., N., NL-5656 AA Eindhoven (NL); BORG, Hermanus, J., NL-5656 AA Eindhoven (NL); VAN SCHIJNDEL, Mark, NL-5656 AA Eindhoven (NL)
(74) Representative: Uittenbogaard, Frank
(86) International application number: PCT/IB2003/000221
(87) International publication number: WO 2003/067587

(56) References cited:
- EP-A- 0 957 477
- WO-A-01/26106
- US-B1- 6 294 310
- PATENT ABSTRACTS OF JAPAN vol. 1996, no. 02, 29 February 1996 (1996-02-29) -& JP 07 262615 A (ASAHI CHEM IND CO LTD), 13 October 1995 (1995-10-13)

## Description

The invention relates to a rewritable optical storage medium for erasable high data rate recording by means of a focused laser-light beam, said medium comprising:
a substrate; and a stack of layers on the substrate; which stack includes: a first dielectric layer; a recording layer of a phase-change material comprising an alloy consisting of Ge, Sb and Te, the alloy having a composition defined by the formula GeₓSb_{y}Te_{z} in atomic percentages, where 0 < x < 15, 50 < y < 80, 10 < z < 30 and x + y + z = 100 ; a second dielectric layer; and a metal reflective layer.

The invention also relates to the use of such an optical recording medium in high data rate applications.

An embodiment of an optical data storage medium of the type mentioned in the opening paragraph is known from United States patent US 5,935,672 filed by Applicants.

An optical data storage medium based on the phase-change principle is attractive, because it combines the possibilities of direct overwrite (DOW) and high storage density with easy compatibility with read-only optical data storage systems. Data storage, in this context, includes digital video-, digital audio- and software-data storage. Phase-change optical recording involves the formation of submicrometer-sized amorphous recording marks in a crystalline recording layer using a focused relatively high power laser-light beam. During recording of information, the medium is moved with respect to the focused laser-light beam that is modulated in accordance with the information to be recorded. Marks are formed when the high power laser-light beam melts the crystalline recording layer. When the laser-light beam is switched off and/or subsequently moved relatively to the recording layer, quenching of the molten marks takes place in the recording layer, leaving an amorphous information mark in the exposed areas of the recording layer that remains crystalline in the unexposed areas. Erasure of written amorphous marks is realized by recrystallization through heating with the same laser at a lower power level, without melting the recording layer. The amorphous marks represent the data bits, which can be read, e.g. via the substrate, by a relatively low-power focused laser-light beam. Reflection differences of the amorphous marks with respect to the crystalline recording layer bring about a modulated laser-light beam which is subsequently converted by a detector into a modulated photocurrent in accordance with the recorded information.

One of the most important requirements in phase-change optical recording is a high data rate, which means that data can be written and rewritten in the medium with a user data rate of at least 25 Mbits/s. Such a high data rate requires the recording layer to have a high crystallization speed, i.e. a short crystallization time, during DOW. To ensure that previously recorded amorphous marks can be recrystallized during DOW, the recording layer must have a proper crystallization speed to match the velocity of the medium relative to the laser-light beam. If the crystallization speed is not high enough the amorphous marks from the previous recording, representing old data, cannot be completely erased, meaning recrystallized, during DOW. This causes a high noise level. A high crystallization speed is particularly required in high-density recording and high data rate optical recording media, such as in disk-shaped CD-RW high speed, DVD-RW, DVD+RW, DVD-RAM, DVR-red and blue which respectively are abbreviations of the known Compact Disk and the new generation high density Digital Versatile or Video Disk+RW and -RAM, where RW and RAM refer to the rewritability of such disks, and Digital Video Recording optical storage disks, where red and blue refer to the used laser wavelength. For these new disks, the complete erasure time (CET) has to be lower than 40 ns. CET is defined as the minimum duration of an erasing pulse for complete crystallization of a written amorphous mark in a crystalline environment. The CET is measured with a static tester. For DVD+RW, which has a 4.7 GB recording density per 120 mm disk, a user data-bit rate of 26 Mbits/s is needed, and for DVR-blue said rate is 35 Mbits/s. For high speed versions of DVD+RW and DVR-blue data rates of 50 Mbits/s and higher are required. The data rate for Audio/Video (AV)-applications is determined by the AV-information stream but for computer-data applications no restrictions in data rate apply, i.e. the larger the better. Each of these data bit rates can be translated to a maximum CET which is influenced by several parameters, e.g. thermal design of the recording stacks and the recording layer materials used.

The known medium of the phase-change type comprises a disk-shaped substrate carrying a stack of layers consisting, in succession, of a first dielectric layer, a recording layer of a phase-change Ge-Sb-Te alloy, a second dielectric layer and a metal reflective layer. Such a stack of layers can be referred to as an IPIM structure, wherein M represents a reflective metal layer, I represents a dielectric layer and P represents a phase-change recording layer. Said patent discloses a compound Ge₅₀ₓSb₄₀₋₄₀ₓTC₆₀₋₁₀ₓ in which formula 0.166 ≤ x ≤ 0.444. Stoichiometric Ge-Sb-Te materials falling within the mentioned range, e.g. Ge₂Sb₂Te₅, are used as the recording layer for e.g. DVD-RAM disks. These stoichiometric compositions have a nucleation-dominated crystallization process. It means that the erasure of a written amorphous mark occurs by nucleation in the mark and subsequent growth. According to said patent the CET of said Ge-Sb-Te layer decreases by increasing its thickness up to 25 nm and then tends to become a constant upon further increase of the layer thickness at a value of about 50 - 60 ns. A thickness range between 25 and 35 nm has been claimed for use in high data rate recording. When the thickness of the recording layer becomes smaller than 25 ns the CET increases to values above 80 ns.

The known recording medium shows a minimum CET of its recording layer of about 50 - 60 ns and the CET tends to increase going to smaller recording layer thicknesses. For multi recording layer applications it is desirable that the recording layer, which is closest to the recording/reading laser-light beam, has a relatively high optical transmission in order to allow writing and reading in further recording layers. A relatively high optical transmission of the recording layer can only be achieved when its thickness is lower than 25 nm. However, at recording layer thicknesses of 25 nm or less the CET of the known medium increases to values which are less suitable for high data rate recording.

United States Patent US 6,294,310 discloses an optical information recording medium as described in the opening paragraph with a recording layer thickness of 15 - 30 nm.

Japanese Patent Application Publication JP-A-07 262 615 discloses an optical information recording medium with a recording layer of an alloy of Ge-Te-Sb having a thickness of 10 nm.

It is an object of the invention to provide a rewritable optical storage medium of the kind described in the opening paragraph, having a recording layer with a thickness of lower than 25 nm and a CET of maximum 40 ns, making it suitable for high data rate recording.

This object is achieved in accordance with the invention by an optical storage medium as described in the opening paragraph, which is characterized in that the recording layer has a thickness selected from the range of 7 to 13 nm. These materials have a growth-dominated crystallization process. It means that mark erasure occurs by direct growth from the boundary between the written amorphous mark and crystalline background. Nucleation within the written amorphous mark does not occur before this growth is finished. Surprisingly, the CET of these materials first decreases rapidly with increasing the layer thickness and then increases again upon further increasing layer thickness. The CET becomes shorter than 40 ns when the recording layer has a thickness selected from the range of 7 to 13 nm. The thickness dependence of the CET of the claimed Ge-Sb-Te compositions may be understood as follows. The strong initial decrease of the CET with the increase of the phase-change recording layer thickness is a result of competition between the contributions of the interface material and the bulk material. When the layer is relatively thin, the volume fraction of the material located at the interface is large, which is often structurally very different from its bulk form, e.g. has more defects. With the increase of layer thickness, the fraction of the material that is in bulk form will increase, and above a certain thickness the behavior of the material will be governed by the bulk form. Apparently, the bulk materials have a more favorable growth speed than the interface materials.

Upon further increase of the phase change layer thickness the increase of the CET may be caused by the volume increase of the material. The crystallization process of the claimed Ge-Sb-Te layer is growth-dominated. The volume of the material to be crystallized becomes important. The size of the crystallites is typically 10 nm. When the layer is thin, a two-dimensional growth is needed, which needs a shorter time. When the layer becomes thicker, a three-dimensional growth is required, and naturally a longer time is needed

In a favorable embodiment of the optical storage medium according to the invention, the recording layer has a thickness selected from the range of 8.5 to 13 nm. In this range the CET is lower than 35 ns which enables even higher data rates.

In another favorable embodiment of the optical storage medium according to the invention the second dielectric layer has a thickness of 20 to 40 nm. An optimum thickness range for the second dielectric layer, i.e. the layer between the recording layer and the metal reflective layer, is found between 15 and 50 nm, preferably between 20 and 40 nm. When this layer is too thin, the thermal insulation between the recording layer and the metal reflective layer is adversely affected. As a result, the cooling rate of the recording layer is increased, which leads to slow crystallization process and a poor cyclability. The cooling rate will be decreased by increasing the thickness of the second dielectric layer. The CET is not sensitive to the thickness of the metal reflective layer. Its thickness may e.g. be in the range from 20 to 200 nm. But the cyclability is adversely affected when the metal reflective layer is thinner than 60 nm, because the cooling rate is too slow. When the metal reflective layer is 160 nm or thicker, the cyclability deteriorates further, and the recording and erasing power must be high because of the increased thermal conduction. Preferably the thickness of the metal reflective layer is between 80 and 120 nm.

In yet another favorable embodiment of the optical storage medium according to the invention the first dielectric layer has a thickness of 70 to 500 nm. When the first dielectric layer has a thickness lower than 70 nm the cyclability of the medium is adversely affected. Thicknesses larger than 500 nm may cause stresses in the layer and are more expensive to deposit

In a special embodiment of the optical storage medium according to the invention a further recording layer is present in the stack having the same composition as the (first) recording layer. The further recording may be sandwiched between dielectric layers similar to the dielectric layers of the (first) recording layer. Further auxiliary layers may be present. In a so-called multi recording stack medium two or more recording layers are present separated from each other by intermediate layers at a distance larger than the depth of focus of the laser-light beam. Sometimes multi-stack designs are represented by Lₙ in which n denotes 0 or a positive integer number. The first stack through which the laser-light beam enters is called L₀, while each deeper stack is represented by L₁.. Lₙ. Deeper is to be understood in terms of the direction of the incoming laser-light beam. During writing onto and reading from such a medium the laser-light beam is focused onto the recording layer of one of the Lₙ stacks. E.g. in the case of a double stack medium with a L₀ and a L₁ stack, in order to have sufficient write energy and reading signal the L₀-stack must be sufficiently transparent. This is only possible when the recording layer of the L₀-stack has a relatively low thickness of 25 nm or thinner. The L₁ stack, being the deepest stack, may have a thicker recording layer because it does not necessarily have to be optically transparent. According to the invention a low CET is combined with a low recording layer thickness which makes the recording layer according to the invention suitable for use in a multi recording stack medium.

The first and second dielectric layers may be made of a mixture of ZnS and SiO₂, e.g. (ZnS)₈₀(SiO₂)₂₀. Alternatives are, e.g. SiO₂, TiO₂, ZnS, AlN and Ta₂O₅. Preferably the dielectric layer comprises a carbide, like SiC, WC, TaC, ZrC or TiC. These materials give a higher crystallization speed and better cyclability than ZnS-SiO₂ mixture.

For the metal reflective layer, metals such as Al, Ti, Au, Ni, Cu, Ag, Cr, Mo, W, and Ta and alloys of these metals, can be used.

The substrate of the data storage medium is at least transparent for the laser wavelength, and is made, for example, of polycarbonate, polymethyl methacrylate (PMMA), amorphous polyolefin or glass. Transparency of the substrate is only required when the laser-light beam enters the recording stacks via the entrance face of the substrate. In a typical example, the substrate is disk-shaped and has a diameter of 120 mm and a thickness of 0.1, 0.6 or 1.2 mm. The substrate may be opaque when the laser-light beam enters the stack via the side opposite from the side of the substrate. In the latter case the metal reflective layer of the stack is adjacent the substrate. This is also referred to as an inversed stack. An inversed stack is e.g. used in the DVR disk.

The surface of the disk-shaped substrate on the side of the recording stacks is, preferably, provided with a servotrack, which can be scanned optically. This servotrack is often constituted by a spiral-shaped groove and is formed in the substrate by means of a mould during injection molding or pressing. These grooves can be alternatively formed in a replication process in the synthetic resin of the spacer layer, for example, a UV light-curable acrylate

Optionally, the outermost layer of the stack is screened from the environment by means of a protective layer of, for example, UV light-cured poly(meth)acrylate. The protective layer must be of good optical quality, i.e. substantially free from optical aberrations and substantially uniform in thickness, when the laser-light enters the recording stacks via the protective layer. In this case, the protective layer is transparent to the laser-light and is also called cover layer. For DVR disks this cover layer has a thickness of 0.1 mm.

Recording and erasing data in the recording layers of the recording stacks may be achieved by using a short-wavelength laser, e.g. with a wavelength of 660 nm or shorter (red to blue).

Both the metal reflective layer, and the dielectric layers can be provided by evaporation or sputtering.

The phase-change recording layer can be applied to the substrate by vacuum deposition. Known vacuum deposition processes are evaporation (E-beam evaporation, resistant heat evaporation from a crucible), sputtering, low pressure Chemical Vapor Deposition (CVD), Ion Plating, Ion Beam Assisted Evaporation, Plasma enhanced CVD. Normal thermal CVD processes are not applicable because of too high reaction temperature. The layer thus deposited is amorphous and exhibits a low reflection. In order to constitute a suitable recording layer having a high reflection, this layer must first be completely crystallized, which is commonly referred to as initialization. For this purpose, the recording layer can be heated in a furnace to a temperature above the crystallization temperature of the Ge-Sb-Te alloy, e.g. 180°C. A synthetic resin substrate, such as polycarbonate, can alternatively be heated by a special laser-light beam of sufficient power. This can be realized, e.g. in a special recorder, in which case the special laser-light beam scans the moving recording layer. The amorphous layer is then locally heated to the temperature required for crystallizing the layer, without the substrate being subjected to a disadvantageous heat load.

High-density recording and erasing can be achieved by using a short-wavelength laser, e.g. with a wavelength of 660 nm or shorter (red to blue).

The invention will be elucidated in greater detail by means of exemplary embodiments and with reference to the accompanying drawings, in which
Fig. 1 shows a schematic cross-sectional view of an optical storage medium in accordance with the invention,
Fig. 2 shows the relation between CET (in ns) and the thickness d₃ (in nm) of the recording layer for Ge₇Sb_{76.4}Te_{16.6} material.

### Example.

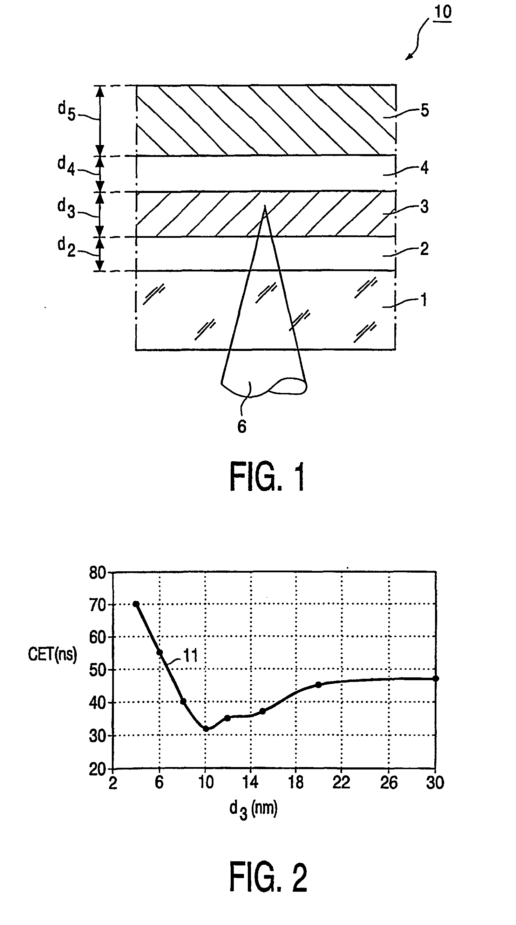

In Fig 1 shows a part of a cross-section of a rewritable optical storage medium 10 for erasable high-speed recording in accordance with the invention. Recording and reading is performed by means of a laser-light beam 6. The medium 10 has a substrate 1 made of PC having a diameter of 120 mm and a thickness of 0.6 mm. An IPIM stack of layers is present on the substrate including a first dielectric layer 2 of (ZnS)₈₀(SiO₂)₂₀ with a thickness d₂=70 nm, a recording layer 3 of a phase-change material with the composition Ge₇Sb_{76.4}Te_{16.6} with a thickness d₃, and a second dielectric layer 4 of (ZnS)₈₀(SiO₂)₂₀ with a thickness d₄= 20 nm and a metal reflective layer 5 of Al with a thickness d₅= 100 nm. The recording layer 6 having a thickness d₃ is varied between 4 and 30 nm. Results of the effect of this variation are shown in Fig.2.

The phase-change recording layer 3 is applied to the substrate by vapor depositing or sputtering of a suitable target. The layer 3 thus deposited is amorphous and is initialized, i.e. crystallized, in a special recorder, as described earlier. The layers 2, 4 and 5 are also provided by sputtering.

The laser-light beam 6 for recording, reproducing and erasing of information enters the recording layer 3 *via* the substrate 1. The amorphous marks are written with a single laser pulse of power P_{w} = 1.25 Pₘ (Pₘ= melting threshold power) and duration 100 ns. The erase power is P_{w}/2. Note that alternative embodiments are possible in which the substrate 1 is present adjacent the metal reflective layer 5 while the laser-light beam 6 still enters the recording layer 3 through layer 2. In this case an optional optically transparent cover layer of e.g. 0.1 mm may be present adjacent dielectric layer 2.

In Fig. 2 the dependence of the CET in ns on the thickness d₃ in nm of the phase-change recording layer 3 for the compound Ge₇Sb_{76.4}Te_{16.6} is shown. From curve 11 of Figure 2 it is clear that the CET decreases rapidly by increasing d₃ up to about 10 nm, and it tends to increase slowly and saturate at a low value of about 47 ns upon further increase of d₃.

It should be noted that the above-mentioned embodiment illustrates rather than limits the invention, and that those skilled in the art will be able to design many alternative embodiments within the scope of the claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

According to the invention an erasable optical storage medium is provided, which is suitable for direct overwrite and high data rate recording, such as DVD+RW and rewritable DVR, having a relatively thin phase change type recording layer with a possible data rate of at least 25 Mb/s.

## Claims

1. A rewritable optical storage medium (10) for erasable high data rate recording by means of a focused laser-light beam (6), said medium (10) comprising:
a substrate (1); and
a stack of layers on the substrate (1); which stack includes:
a first dielectric layer (2);
a recording layer (3) of a phase-change material comprising an alloy consisting of Ge, Sb and Te;
a second dielectric layer (4); and
a metal reflective layer (5); and
the alloy has a composition defined by the formula GeₓSb_{y}Te_{z} in atomic percentages, where 0<x<15,50<y<80,10<z<30 and x+y+z=100,
**characterized in that**
the recording layer (3) has a thickness selected from the range of 7 to 13 nm.

2. An optical storage medium (10) as claimed in Claim 1, **characterized in that** the recording layer (3) has a thickness selected from the range of 8.5 to 13 nm.

3. An optical storage medium (10) as claimed in any one of Claims 1 or 2, **characterized in that** the alloy has a composition defined by the formula GeₓSb_{y}Te_{z} in atomic percentages, where 6 < x < 8, 70 < y < 80, 15 < z < 20 and x + y + z = 100.

4. An optical storage medium (10) as claimed in Claim 1, **characterized in that** the second dielectric layer (4) has a thickness of 20 to 40 nm.

5. An optical storage medium (10) as claimed in Claim 1, **characterized in that** the first dielectric layer (2) has a thickness of 70 to 500 nm.

6. An optical storage medium (10) as claimed in Claim 1, **characterized in that** a further recording layer is present in the stack having the same composition as the recording layer (3).

7. Use of an optical storage medium (10) as claimed in any one of the preceding Claims, for high data rate recording with a data rate higher than 25 Mb/s.

## Patentansprüche

1. Wieder beschreibbares, optisches Speichermedium (10) zur löschbaren, eine hohe Daten-Übertragungsgeschwindigkeit aufweisenden Aufzeichnung mit Hilfe eines fokussierten Laserstrahls (6), wobei das Medium (10) aufweist:
ein Substrat (1) sowie
übereinander angeordnete Schichten auf dem Substrat (1) mit:
einer ersten dielektrischen Schicht (2),
einer Aufzeichnungsschicht (3) aus einem Phasenveränderungsmaterial mit einer Legierung aus Ge, Sb und Te,
einer zweiten dielektrischen Schicht (4) sowie
einer Metallspiegelschicht (5),
wobei die Legierung eine, durch die Formel GeₓSb_{y}Te_{z} in Atomprozent definierte Zusammensetzung aufweist, wobei 0 < x < 15, 50 < y < 80, 10 < z < 30 und x + y + z = 100,
**dadurch gekennzeichnet, dass**
die Aufzeichnungsschicht (3) eine Dicke im Bereich von 7 bis 13 nm aufweist.

2. Optisches Speichermedium (10) nach Anspruch 1, **dadurch gekennzeichnet, dass** die Aufzeichnungsschicht (3) eine Dicke im Bereich von 8,5 bis 13 nm aufweist.

3. Optisches Speichermedium (10) nach einem der Ansprüche 1 oder 2, **dadurch gekennzeichnet, dass** die Legierung eine, durch die Formel GeₓSb_{y}Te_{z} in Atomprozent definierte Zusammensetzung aufweist, wobei 6 < x < 8, 70 < y < 80, 15 < z < 20 und x +y+z = 100.

4. Optisches Speichermedium (10) nach Anspruch 1, **dadurch gekennzeichnet, dass** die zweite dielektrische Schicht (4) eine Dicke von 20 bis 40 nm aufweist.

5. Optisches Speichermedium (10) nach Anspruch 1, **dadurch gekennzeichnet, dass** die erste dielektrische Schicht (2) eine Dicke von 70 bis 500 nm aufweist.

6. Optisches Speichermedium (10) nach Anspruch 1, **dadurch gekennzeichnet, dass** eine weitere Aufzeichnungsschicht in dem Schichtenstapel vorgesehen ist, welche die gleiche Zusammensetzung wie die Aufzeichnungsschicht (3) aufweist.

7. Verwendung eines optischen Speichermediums (10) nach einem der vorangegangenen Ansprüche zur, eine hohe Daten-Übertragungsgeschwindigkeit vorsehenden Aufzeichnung mit einer höheren Datenrate als 25 Mb/s.

## Revendications

1. Support de stockage optique réenregistrable (10) pour enregistrement de données effaçables à haut débit de données par le moyen d'un faisceau focalisé de lumière laser (6), ledit support (10) comprenant :
un substrat (1); et
un empilement de couches sur le substrat (1); lequel empilement comprend :
une première couche diélectrique (2);
une couche d'enregistrement (3) d'un matériau à changement de phase qui comprend un alliage composé de Ge, Sb et Te;
une deuxième couche diélectrique (4); et
une couche métallique réfléchissante (5); et
l'alliage a une composition définie par la formule GeₓSb_{y}Te_{z} en pourcentages atomiques, où 0 < x < 15, 50 < y < 80, 10 < z < 30 et x + y + z = 100; **caractérisé en ce que** la couche d'enregistrement (3) a une épaisseur sélectionnée dans une plage de 7 à 13 nm.

2. Support de stockage optique (10) selon la revendication 1, **caractérisé en ce que** la couche d'enregistrement (3) a une épaisseur sélectionnée dans la plage de 8,5 à 13 nm.

3. Support de stockage optique (10) selon une quelconque des revendications 1 ou 2, **caractérisé en ce que** l'alliage a une composition définie par la formule GeₓSb_{y}Te_{z} en pourcentages atomiques, où 6 < x < 8, 70 < y < 80, 15 < z < 20 et x + y + z = 100.

4. Support de stockage optique (10) selon la revendication 1, **caractérisé en ce que** la deuxième couche diélectrique (4) a une épaisseur de 20 à 40 nm.

5. Support de stockage optique (10) selon la revendication 1, **caractérisé en ce que** la première couche diélectrique (2) a une épaisseur de 70 à 500 nm.

6. Support de stockage optique (10) selon la revendication 1, **caractérisé en ce qu'**une couche d'enregistrement supplémentaire est présente dans l'empilement, ayant la même composition que la couche d'enregistrement (3).

7. Utilisation d'un support de stockage optique (10) selon une quelconque des revendications précédentes pour enregistrement à haut débit de données, avec un débit supérieur à 25 Mb/s.
